# EUROPÄISCHE PATENTSCHRIFT

(11) **EP 3 072 357 B1**
(45) Veröffentlichungstag und Bekanntmachung des Hinweises auf die Patenterteilung: **10.01.2018**
(21) Anmeldenummer: 14806088.2
(22) Anmeldetag: 11.11.2014
(51) Int. Cl.: H05B 6/12

(54) **GARGERÄTEVORRICHTUNG**
COOKING APPLIANCE DEVICE
DISPOSITIF D'APPAREIL DE CUISSON

(30) Priorität: 21.11.2013 ES 201331695
(43) Veröffentlichungstag der Anmeldung: 28.09.2016
(73) Patentinhaber: BSH Hausgeräte GmbH, 81739 München (DE)
(72) Erfinder: ACERO ACERO, Jesus, E-50002 Zaragoza (ES); ARANDA VAZQUEZ, Sandra, E-50018 Zaragoza (ES); LLORENTE GIL, Sergio, E-50009 Zaragoza (ES)
(86) Internationale Anmeldenummer: PCT/IB2014/065946
(87) Internationale Veröffentlichungsnummer: WO 2015/075600

(56) Entgegenhaltungen:
- EP-A2- 0 158 353
- DE-A1- 3 808 756

## Beschreibung

Die Erfindung geht aus von einer Gargerätevorrichtung nach dem Oberbegriff des Anspruchs 1.
Aus dem Stand der Technik ist bereits eine Gargerätevorrichtung mit einer Abschirmeinheit und mit einem Spulenträger bekannt. Ein Abschirmmaterial der Abschirmeinheit ist in einem aufwendigen Herstellungsverfahren, ausgehend von einem granulat-förmigen oder pulver-förmigen Zustand zu mehreren dichten Masseblöcken zusammengepresst, in welchen einzelne Körner unbeweglich relativ zueinander angeordnet sind. Diese dichten Masseblöcke sind an dem Spulenträger befestigt, beispielsweise mittels Klebeverbindungen. Dabei ist die auf mehrere Masseblöcke aufgeteilte Abschirmeinheit dazu vorgesehen, zumindest einen Ort gegen ein Magnetfeld, das von einer auf dem Spulenträger angeordneten Spule erzeugt ist, abzuschirmen. Die Druckschrift DE 38 08 756 A1 zeigt eine Gargerätevorrichtung nach dem Oberbegriff des Anspruchs 1.

Die Aufgabe der Erfindung besteht insbesondere darin, eine gattungsgemäße Vorrichtung vorteilhaft weiterzuentwickeln. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.
Die Erfindung geht aus von einer Gargerätevorrichtung, insbesondere einer Kochfeldvorrichtung, mit zumindest einer Abschirmeinheit, die dazu vorgesehen ist, zumindest einen Ort gegen ein von einer Spule, insbesondere einer Flachspule, erzeugtes Magnetfeld zumindest teilweise abzuschirmen.
Es wird vorgeschlagen, dass die zumindest eine Abschirmeinheit zumindest größtenteils zumindest granulat-förmig ausgebildet ist. Unter einer "Gargerätevorrichtung" soll insbesondere zumindest ein Teil, insbesondere eine Unterbaugruppe, eines Gargeräts, insbesondere eines Kochfelds, verstanden werden. Insbesondere kann die Gargerätevorrichtung auch das gesamte Gargerät, insbesondere das gesamte Kochfeld, umfassen. Unter einer "Abschirmeinheit" soll insbesondere eine Einheit verstanden werden, die dazu vorgesehen ist, eine Feldstärke des von der Spule erzeugten Magnetfelds an dem zumindest einen Ort zu reduzieren, insbesondere in einem Vergleich zu einer Ausgestaltung unter Vermeidung der Abschirmeinheit und/oder vorteilhaft in einem Vergleich zu einer Ausgestaltung vor einer Montage der zumindest einen Abschirmeinheit. Vorzugsweise ist die zumindest eine Abschirmeinheit, insbesondere zusätzlich zu einer Abschirmung des zumindest einen Orts gegen das Magnetfeld, dazu vorgesehen, von der Spule erzeugte Streufelder zu minimieren. Die zumindest eine Abschirmeinheit ist vorteilhaft dazu vorgesehen, in einer Einbaulage wenigstens in einer Horizontalrichtung zu der Spule benachbart angeordnete Orte gegen das von der Spule erzeugte Magnetfeld abzuschirmen, wobei der zumindest eine Ort insbesondere in der Horizontalrichtung zu der Spule benachbart angeordnet ist. Unter einer "Spule" soll insbesondere ein induktives Bauelement mit zumindest einer insbesondere bestimmten Induktivität verstanden werden. Insbesondere ist die Spule zumindest im Wesentlichen in Form einer Kreisscheibe, alternativ in Form eines Ovals oder eines Rechtecks, ausgebildet. Insbesondere weist die Spule zumindest fünf, insbesondere zumindest zehn, vorteilhaft zumindest fünfzehn, bevorzugt zumindest zwanzig Wicklungen zumindest einer Induktionsheizleitung auf. Beispielsweise könnten Wicklungen zumindest eines Spulenabschnitts in mehreren Ebenen angeordnet sein. Vorzugsweise sind Wicklungen zumindest eines Spulenabschnitts in einer Ebene angeordnet. Unter der Wendung, dass die zumindest eine Abschirmeinheit dazu vorgesehen ist, zumindest einen Ort gegen ein von einer Spule erzeugtes Magnetfeld "zumindest teilweise" abzuschirmen, soll insbesondere verstanden werden, dass die zumindest eine Abschirmeinheit dazu vorgesehen ist, eine Feldstärke des von der Spule erzeugten Magnetfelds an dem zumindest einen Ort auf einen Wert von maximal 50 %, insbesondere von maximal 30 %, vorteilhaft von maximal 10 %, besonders vorteilhaft von maximal 5 % und vorzugsweise von maximal 2 % eines abschirmeinheitlosen Werts zu reduzieren. Unter einer "zumindest granulat-förmigen" Abschirmeinheit soll insbesondere eine Abschirmeinheit verstanden werden, die vorteilhaft eine Vielzahl an Körnern umfasst und die insbesondere lose granulat-förmig ausgebildet ist, insbesondere in einem betriebsbereiten Zustand, wobei insbesondere einzelne Körner in einem betriebsbereiten Zustand und bei Anordnung in freiem Raum zumindest weitgehend unabhängig voneinander bewegbar sind und wobei vorteilhaft die Körner eine Korngröße von maximal 10 mm, insbesondere von maximal 5 mm, vorteilhaft von maximal 3 mm aufweisen. Insbesondere rieselt ein Abschirmmaterial der sich in betriebsbereitem Zustand befindlichen zumindest einen zumindest granulat-förmigen Abschirmeinheit beim Öffnen zumindest eines Behälters, in dem das Abschirmmaterial angeordnet ist, aus dem zumindest einen Behälter heraus. Vorteilhaft können einzelne Körner frei aus einer Vielzahl an Körnern herausgegriffen und/oder hinzugefügt werden. Unter der Wendung, dass die zumindest eine Abschirmeinheit "zumindest größtenteils" zumindest granulat-förmig ausgebildet ist, soll insbesondere verstanden werden, dass die zumindest eine Abschirmeinheit zu einem Massenanteil und/oder Volumenanteil von mindestens 80 %, insbesondere von mindestens 90 % und vorteilhaft von mindestens 95 % zumindest granulat-förmig ausgebildet ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann eine gattungsgemäße Gargerätevorrichtung vorteilhaft weiterentwickelt werden. Insbesondere können eine preiswerte Ausgestaltung und/oder eine hohe Effizienz erreicht werden. Vorteilhaft kann ein Großteil eines aufwendigen Herstellungsverfahrens, das zur Anordnung eines Abschirmmaterials in Form eines Masseblocks benötigt ist, vermieden werden. Darüber hinaus kann eine hohe Flexibilität erreicht werden, wobei die zumindest eine Abschirmeinheit vorteilhaft in beliebigen insbesondere dreidimensionalen Formen geformt werden kann. Vorzugsweise kann eine hohe Abschirmungswirkung an dem zumindest einen Ort erreicht werden.

Ferner wird vorgeschlagen, dass die zumindest eine Abschirmeinheit dazu vorgesehen ist, das von der Spule erzeugte Magnetfeld an zumindest einem weiteren Ort zu bündeln. Vorzugsweise ist die zumindest eine Abschirmeinheit dazu vorgesehen, eine Form und/oder eine Feldstärke des Magnetfelds zu verändern. Die zumindest eine Abschirmeinheit ist insbesondere dazu vorgesehen, das Magnetfeld wenigstens in einem Bereich eines Gargeschirrs, vorteilhaft eines Gargeschirrbodens, zu bündeln, insbesondere zu verstärken. Der zumindest eine weitere Ort ist insbesondere in einer Einbaulage vorteilhaft in einer Vertikalrichtung zu der Spule benachbart angeordnet. Dadurch kann insbesondere ein hoher Komfort für einen Bediener und/oder ein schneller Garvorgang erreicht werden. Vorzugsweise kann eine im Wesentlichen gleichmäßige Wärmeverteilung erreicht werden, wobei insbesondere eine Überhitzung in einem Bereich der Spule vermieden werden kann.

Zudem wird vorgeschlagen, dass die zumindest eine Abschirmeinheit wenigstens ein Pulver aufweist. Die zumindest eine Abschirmeinheit weist insbesondere Körner mit einer Korngröße von weniger als 1000 µm, insbesondere von maximal 500 µm, vorteilhaft von maximal 300 µm und besonders vorteilhaft von maximal 100 µm auf. Insbesondere weist die zumindest eine Abschirmeinheit Körner mit einer Korngröße von mindestens 2 µm, insbesondere von mindestens 5 µm, vorteilhaft von mindestens 10 µm und besonders vorteilhaft von mindestens 20 µm auf. Dadurch kann insbesondere eine hohe Flexibilität erreicht werden, wobei die zumindest eine Abschirmeinheit vorteilhaft in beliebigen insbesondere dreidimensionalen Formen formbar ist.
Alternativ oder zusätzlich zu einer Ausgestaltung, bei welcher die zumindest eine Abschirmeinheit wenigstens ein Pulver aufweist, wird vorgeschlagen, dass die zumindest eine Abschirmeinheit wenigstens ein Granulat aufweist. Vorteilhaft weisen Körner der zumindest einen Abschirmeinheit eine Korngröße von mindestens 1 mm und vorteilhaft von maximal 2 mm auf. Dadurch können insbesondere geringe Kosten erreicht werden. Es sind verschiedene, einem Fachmann als sinnvoll erscheinende Ausgestaltungen der zumindest einen Abschirmeinheit denkbar. Beispielweise ist denkbar, dass die zumindest eine Abschirmeinheit wenigstens ein metallisches Material aufweist, insbesondere wenigstens ein ferromagnetisches und/oder ferrimagnetisches Material, wobei das wenigstens eine metallische Material insbesondere eine relative Permeabilität von wenigstens 10, insbesondere von zumindest 100 und vorzugsweise von mindestens 1000 aufweist. Hierbei könnte die zumindest eine Abschirmeinheit beispielsweise Eisen aufweisen. Vorzugsweise ist die zumindest eine Abschirmeinheit wenigstens teilweise aus Ferriten, vorteilhaft aus Weichferriten, alternativ oder zusätzlich aus Hartferriten, ausgebildet. Unter dem Begriff "Ferrite" soll insbesondere ein vorzugsweise ferrimagnetisches vorteilhaft keramisches Material verstanden werden, das vorteilhaft Eisenoxid Hämatit und/oder insbesondere Magnetit und/oder vorteilhaft weitere Metalloxide aufweist. Ferrite weisen insbesondere eine elektrische Leitfähigkeit von maximal 2 S/m, insbesondere von maximal 10⁻³ S/m, vorteilhaft von maximal 10⁻⁶ S/m auf. Dadurch kann insbesondere eine effektive Veränderung und/oder Verformung des von der Spule erzeugten Magnetfelds an dem zumindest einen Ort und/oder an dem zumindest einen weiteren Ort erreicht werden. Ferner kann einer Erhitzung der Abschirmeinheit vorteilhaft entgegengewirkt werden.

Zudem wird vorgeschlagen, dass die zumindest eine Abschirmeinheit eine relative Permeabilität von maximal 9000, insbesondere von maximal 7000, vorteilhaft von maximal 5000, besonders vorteilhaft von maximal 3000 und vorzugsweise von maximal 2000 aufweist, wodurch insbesondere eine Überhitzung der Spule vermieden werden kann.
Weiterhin wird vorgeschlagen, dass die zumindest eine Abschirmeinheit eine relative Permeabilität von maximal 1500, insbesondere von maximal 1300, vorteilhaft von maximal 1200 und besonders vorteilhaft von maximal 1100 aufweist. Dadurch kann insbesondere ein optimiertes Preis-Leistungs-Verhältnis erreicht werden.
Ferner wird vorgeschlagen, dass die Gargerätevorrichtung zumindest einen Behälter umfasst, der in einer Einbaulage zu einer Lagerung der zumindest einen Abschirmeinheit vorgesehen ist. Unter einem "Behälter" soll insbesondere ein dreidimensionaler Körper verstanden werden, vorzugsweise in Form einer Art Wanne, der insbesondere einen Behälterboden und vorteilhaft zumindest eine Seitenwand und besonders vorteilhaft zusätzlich zumindest einen Teil einer Behälterdecke aufweist. Vorzugsweise bildet der zumindest eine Behälter wenigstens einen Großteil eines geschlossenen Volumens aus, in dem die zumindest eine Abschirmeinheit in einem betriebsbereiten Zustand angeordnet ist. Vorteilhaft weist der zumindest eine Behälter ein isolierendes, vorteilhaft zumindest teilweise flexibles Material auf, das insbesondere zusätzlich wenigstens im Wesentlichen temperaturresistent ausgebildet ist. Der zumindest eine Behälter kann vorteilhaft beliebige dreidimensionale Formen annehmen. Beispielsweise könnte der zumindest eine Behälter in Form eines Kegelstupfes, eines Torus und/oder eines Pyramidenstumpfes ausgebildet sein. Alternativ oder zusätzlich sind weitere, einem Fachmann als sinnvoll erscheinende Formen denkbar. Vorzugsweise ist der zumindest eine Behälter jedoch in Form eines Zylinders und/oder eines Rings ausgebildet. Unter der Wendung, dass der zumindest eine Behälter in einer Einbaulage zu einer "Lagerung" der zumindest einen Abschirmeinheit vorgesehen ist, soll insbesondere verstanden werden, dass der zumindest eine Behälter in der Einbaulage eine Gewichtskraft der zumindest einen Abschirmeinheit trägt, wobei die zumindest eine Abschirmeinheit in der Einbaulage insbesondere oberhalb des Behälterbodens aufliegt. Dadurch kann insbesondere eine langlebige Ausgestaltung und/oder eine sichere Lagerung der zumindest einen Abschirmeinheit erreicht werden. Darüber hinaus kann vorteilhaft die zumindest eine Abschirmeinheit gezielt an vorgegebenen Stellen angeordnet werden, wodurch eine hohe Wirkung der zumindest einen Abschirmeinheit erreicht werden kann.

Zudem wird vorgeschlagen, dass die Gargerätevorrichtung zumindest einen Spulenträger umfasst, der insbesondere in einem montierten Zustand mit dem zumindest einen Behälter verbunden ist, wobei vorzugsweise der zumindest eine Behälter insbesondere gemeinsam mit zumindest einem Spulenträger ein geschlossenes Volumen ausbildet, in dem die zumindest eine Abschirmeinheit angeordnet ist. Unter einem "Spulenträger" soll insbesondere eine Einheit verstanden werden, die dazu vorgesehen ist, die Induktionsheizleitung in Form und/oder Position zu halten. Insbesondere ist der zumindest eine Spulenträger von einem isolierenden, vorteilhaft zumindest teilweise flexiblen Material gebildet. Dadurch kann insbesondere eine kompakte und/oder eine platzsparende Ausgestaltung erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Gargerät mit einer erfindungsgemäßen Gargerätevorrichtung in einer schematischen Draufsicht,
- Fig. 2: einen Behälter, eine Abschirmeinheit, einen Spulenträger und eine Induktionsheizleitung der Gargerätevorrichtung aus Fig. 1 in einer schematischen Schnittdarstellung und
- Fig. 3: einen Behälter, eine Abschirmeinheit, einen Spulenträger und eine Induktionsheizleitung einer alternativen Gargerätevorrichtung in einer schematischen Schnittdarstellung.

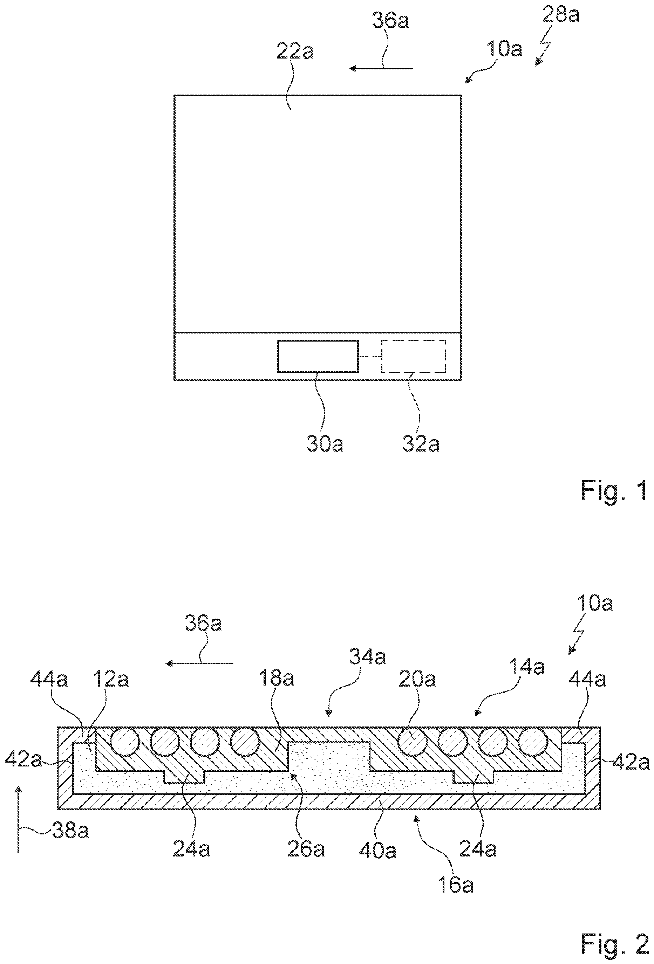

Fig. 1 zeigt ein Gargerät 28a, das als Kochfeld, insbesondere als Induktionskochfeld, ausgebildet ist, mit einer Gargerätevorrichtung 10a, die als Kochfeldvorrichtung, insbesondere als Induktionskochfeldvorrichtung, ausgebildet ist. Alternativ zu einer Ausbildung als Kochfeld könnte das Gargerät als induktiv beheizbarer Backofen ausgebildet sein. Ebenfalls denkbar sind weitere, einem Fachmann als sinnvoll erscheinende Gargeräte.

Das Gargerät 28a umfasst eine Kochfeldplatte 22a, die zu einem Aufstellen von Gargeschirren vorgesehen ist. Die Kochfeldplatte 22a bildet eine Kochfläche aus. Das Gargerät 28a umfasst eine Bedieneinheit 30a zu einer Eingabe und/oder Auswahl von Betriebsparametern, beispielsweise einer Heizleistung und/oder einer Heizleistungsdichte und/oder einer Heizzone. Die Bedieneinheit 30a ist zu einer Ausgabe eines Werts eines Betriebsparameters an einen Bediener vorgesehen. Das Gargerät 28a umfasst eine Steuereinheit 32a, die in Abhängigkeit von mittels der Bedieneinheit 30a eingegebener Betriebsparameter Aktionen ausführt und/oder Einstellungen verändert.

Die Gargerätevorrichtung 10a umfasst mehrere Induktionsheizleitungen 20a, die jeweils zu einer Spule 14a gewickelt sind (vgl. Fig. 2). Für jede der Induktionsheizleitungen 20a umfasst die Gargerätevorrichtung 10a einen Spulenträger 18a, auf dem eine der Induktionsheizleitungen 20a zu der Spule 14a gewickelt ist. Im vorliegenden Ausführungsbeispiel sind die Spulenträger 18a wenigstens teilweise aus Kunststoff gebildet. Alternativ und/oder zusätzlich könnten die Spulenträger wenigstens teilweise aus Keramik gebildet sein. Die Induktionsheizleitungen 20a sind aus Kupfer, alternativ oder zusätzlich aus Aluminium, ausgebildet. Alternativ sind weitere, einem Fachmann als sinnvoll erscheinende Materialien denkbar. Die Induktionsheizleitungen 20a sind jeweils um ein Spulenzentrum 34a zu einer Spule 14a gewickelt, wobei das Spulenzentrum 34a mit einem Mittelpunkt und/oder einem Schwerpunkt des Spulenträgers 18a zusammenfällt. Zusätzlich hierzu stellt jedes Spulenzentrum 34a einen Mittelpunkt und/oder einen Schwerpunkt der Spule 14a dar.

Jede Spule 14a bildet ein Heizelement aus und ist zu einer Erzeugung eines Magnetfelds vorgesehen. Mittels des Magnetfelds erhitzt jede Spule 14a in einem Betriebszustand aufgestelltes Gargeschirr. Die Spulen 14a sind unterhalb der Kochfeldplatte 22a angeordnet. Beispielsweise könnten die Spulen getrennt voneinander angeordnete Heizzonen ausbilden, wobei jede der Spulen separat zu einer Erhitzung von aufgestelltem Gargeschirr vorgesehen sein könnte. Ebenfalls denkbar ist eine Anordnung der Spulen in Form einer Kochfeld-Matrix, wobei die Spulen in Zeilen und Spalten angeordnet sein könnten. Hierbei könnten je nach Größe von aufgestelltem Gargeschirr mehrere Spulen gemeinsam eine einzige Heizzone zu einer Erhitzung von aufgestelltem Gargeschirr ausbilden.
Die Gargerätevorrichtung 10a umfasst für jede Spule 14a eine Abschirmeinheit 12a, die mehrere Orte gegen das von einer Spule 14a erzeugte Magnetfeld teilweise abschirmt. Hierbei schirmt jede Abschirmeinheit 12a in einer Einbaulage Orte ab, die in Horizontalrichtungen 36a, die im Wesentlichen parallel zu der Kochfeldplatte 22a ausgerichtet sind, zu der Spule 14a benachbart angeordnet sind. Zusätzlich zu einer Abschirmung der seitlich zu einer jeweiligen Spule 14a benachbarten Orte bündelt jede Abschirmeinheit 12a das von der Spule 14a erzeugte Magnetfeld an weiteren Orten. Die weiteren Orte sind in einer Vertikalrichtung 38a, die im Wesentlichen senkrecht zu der Kochfeldplatte 22a ausgerichtet ist, zu der jeweiligen Spule 14a benachbart. In einem Bereich von aufgestelltem Gargeschirr bündeln die Abschirmeinheiten 12a die von den Spulen 14a erzeugten Magnetfelder. Die Abschirmeinheiten 12a sind zu einer Verstärkung der von den Spulen 14a erzeugten Magnetfelder an den weiteren Orten vorgesehen.
Die Abschirmeinheiten 12a sind größtenteils zumindest granulat-förmig ausgebildet. Im vorliegenden Ausführungsbeispiel weisen die Abschirmeinheiten 12a jeweils ein Pulver auf. In einer alternativen Ausgestaltung ist denkbar, dass die Abschirmeinheiten jeweils ein Granulat aufweisen. Ebenfalls denkbar sind Mischungen, bei denen die Abschirmeinheiten sowohl Pulver als auch Granulat aufweisen. Darüber hinaus könnten die Abschirmeinheiten Pulver und/oder Granulat aus verschiedenen Materialien aufweisen. Beispielsweise könnten hierbei Metalle verwendet werden, welche eine hohe Permeabilität aufweisen, wie beispielsweise Eisen. Im vorliegenden Ausführungsbeispiel sind die Abschirmeinheiten 12a zumindest teilweise aus Ferriten ausgebildet. Hierbei sind die Abschirmeinheiten 12a aus Weichferriten ausgebildet.
Die Abschirmeinheiten 12a weisen eine relative Permeabilität in einem Bereich von im Wesentlichen 1000 auf. Dadurch können die von den Spulen 14a erzeugten Magnetfelder in für den Gebrauch ausreichender Weise verändert werden, wodurch ein optimales Preis-Leistungsverhältnis erreicht werden kann. Die Abschirmeinheiten 12a weisen eine Dichte von maximal 5000 kg/m³ auf. Vorteilhaft weisen die Abschirmeinheiten 12a eine Dichte in einem Bereich von 3000 kg/m³ bis 4500 kg/m³ auf.

Die Gargerätevorrichtung 10a weist für jede Spule 14a einen Behälter 16a auf, der in der Einbaulage zu einer Lagerung der jeweiligen Abschirmeinheit 12a vorgesehen ist (vgl. Fig. 2). Die Behälter 16a weisen jeweils einen Kunststoff auf. Alternativ und/oder zusätzlich könnten die Behälter 16a jeweils eine Keramik aufweisen. Ebenfalls denkbar ist, dass die Behälter mehrere Kunststoffe und/oder mehrere Keramiken aufweisen. Darüber hinaus sind Mischungen denkbar, in welchen die Behälter sowohl einen oder mehrere Kunststoffe als auch eine oder mehrere Keramiken aufweisen.

Die Behälter 16a weisen jeweils einen Behälterboden 40a und eine Seitenwand 42a auf, die mit dem Behälterboden 40a zusammen einen wannenartigen Körper ausbildet. Jeder Behälterboden 40a ist einstückig mit der jeweiligen Seitenwand 42a ausgebildet. Alternativ ist eine mehrteilige Ausgestaltung der Behälter denkbar, wobei Seitenwände und Behälterböden fest miteinander verbunden sind, wie beispielsweise durch eine Klebeverbindung. Hierbei könnten die Behälterböden aus insbesondere isolierendem, vorteilhaft unmagnetischem Metall ausgebildet sein. Ebenfalls denkbar ist, dass die Behälterböden aus Aluminium und/oder austenitischem Stahl ausgebildet sind. Dabei ist denkbar, dass die Behälter dazu vorgesehen sind, elektrische Bauteile, insbesondere wenigstens eine Kochfeldelektronik und/oder die Steuereinheit, gegenüber von den Spulen verursachter elektromagnetischer Strahlung, insbesondere Wärmestrahlung und/oder Magnetfeldern, abzuschirmen.

Zusätzlich zu dem Behälterboden 40a und der Seitenwand 42a weist jeder Behälter 16a eine Behälterdecke 44a auf. Jede Behälterdecke 44a bildet einen Teil einer in der Einbaulage der Kochfeldplatte 22a zugewandten Begrenzung des Behälters 16a aus. Jeder Behälter 16a definiert einen Innenraum 26a, in welchem die Abschirmeinheit 12a in einem montierten Zustand angeordnet ist. Die Behälter 16a und die Spulenträger 18a sind in dem montierten Zustand miteinander verbunden. Hierbei sind die Behälter 16a und die Spulenträger 18a in dem montierten Zustand miteinander verriegelt. Die Spulenträger 18a sind in dem montierten Zustand mit den Behälterdecken 44a der Behälter 16a verriegelt. Die Behälterdecken 44a und die Spulenträger 18a bilden in dem montierten Zustand gemeinsam eine der Kochfeldplatte 22a zugewandte Begrenzung des Innenraums 26a aus. Die Behälter 16a erstrecken sich in dem montierten Zustand über einen Bereich der Spulenzentren 34a der Spulen 14a hinweg.

In dem montierten Zustand überragt jeder Behälter 16a den Spulenträger 18a seitlich. Hierbei überragt jeder Behälter 16a den Spulenträger 18a in dem montierten Zustand in jeder Horizontalrichtung 36a um im Wesentlichen 5 mm. Jeder Behälter 16a erstreckt sich in dem montierten Zustand über im Wesentlichen eine gesamte Fläche der Spule 14a. Jeder Behälter 16a umgibt die Abschirmeinheit 12a in dem montierten Zustand bei Betrachtung in einer Querschnittsebene von drei Seiten teilweise (vgl. Fig. 2). In dem montierten Zustand ragt jeder Spulenträger 18a teilweise in den von dem Behälter 16a definierten Innenraum 26a hinein. An einer der Kochfeldplatte 22a zugewandten Seite verlaufen die Behälter 16a und die Spulenträger 18a in dem montierten Zustand im Wesentlichen bündig.

In dem montierten Zustand sind die Abschirmeinheiten 12a in dem von den Behältern 16a definierten Innenräumen 26a angeordnet. Hierbei füllen die Abschirmeinheiten 12a die Innenräume 26a im Wesentlichen aus. Somit sind die Abschirmeinheiten 12a unter anderem seitlich neben den Spulenträgern 18a angeordnet, wodurch eine effektive Abschirmung der Orte erreicht werden kann. Um eine gleichmäßige Erhitzung von aufgestelltem Gargeschirr zu erreichen, weist die Gargerätevorrichtung 10a für jede Spule 14a ein Blockierungselement 24a auf, das teilweise in dem von dem Behälter 16a definierten Innenraum 26a angeordnet ist. Die Blockierungselemente 24a sind in dem montierten Zustand in Teilbereichen des Innenraums 26a angeordnet, die im Wesentlichen mittig zwischen einer inneren Wicklung und einer äußeren Wicklung der Spulen 14a angeordnet sind. Hierbei sind die Blockierungselemente 24a in dem montierten Zustand im Wesentlichen auf halber Strecke zwischen den Spulenzentren 34a und äußeren Begrenzungen der Spulen 14a angeordnet. Die Blockierungselemente 24a blockieren in dem montierten Zustand eine Anordnung der Abschirmeinheiten 12a in den Teilbereichen der Innenräume 26a. Im vorliegenden Ausführungsbeispiel sind die Blockierungselemente 24a einstückig mit den Spulenträgern 18a ausgebildet. Alternativ könnten die Blockierungselemente separat zu den Spulenträgern ausgebildet sein, wobei die Blockierungselemente an den Spulenträgern angeordnet sind, beispielsweise durch Klebung, Rastung, Klemmung und/oder Verriegelung.

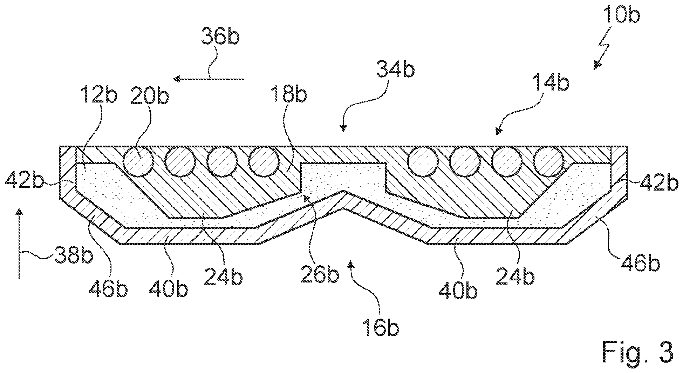

Fig. 3 zeigt einen Behälter 16b und einen Spulenträger 18b einer alternativen Gargerätevorrichtung 10b. Der Behälter 16b, der in der Einbaulage zu einer Lagerung einer Abschirmeinheit 12b vorgesehen ist, weist einen Behälterboden 40b und eine Seitenwand 42b auf. Der Behälterboden 40b ist in dem montierten Zustand im Wesentlichen parallel zu einer Kochfeldplatte 22b ausgerichtet. Die Seitenwand 42b ist in dem montierten Zustand im Wesentlichen senkrecht zu der Kochfeldplatte 22b ausgerichtet. Der Behälterboden 40b und die Seitenwand 42b sind miteinander über Verbindungselemente 46b des Behälters 16b verbunden. Die Verbindungselemente 46b sind in dem montieren Zustand schräg relativ zu der Kochfeldplatte 22b ausgerichtet.

Der Behälter 16b weist bei Betrachtung in einer Querschnittsebene eine im Wesentlichen W-förmige Gestalt auf. Der Behälterboden 40b weist in einem Bereich eines Spulenzentrums 34b eine in Richtung des Spulenträger 18b weisende Einbuchtung auf. An einer der Kochfeldplatte 22b zugewandten Seite verlaufen der Behälter 16b und der Spulenträger 18b im Wesentlichen bündig, wobei der Spulenträger 18b in dem montierten Zustand im Wesentlichen eine gesamte der Kochfeldplatte 22b zugewandte Begrenzung eines von dem Behälter 16b definierten Innenraums 26b ausbildet.

### Bezugszeichen

- 10: Gargerätevorrichtung
- 12: Abschirmeinheit
- 14: Spule
- 16: Behälter
- 18: Spulenträger
- 20: Induktionsheizleitung
- 22: Kochfeldplatte
- 24: Blockierungselement
- 26: Innenraum
- 28: Gargerät
- 30: Bedieneinheit
- 32: Steuereinheit
- 34: Spulenzentrum
- 36: Horizontalrichtung
- 38: Vertikalrichtung
- 40: Behälterboden
- 42: Seitenwand
- 44: Behälterdecke
- 46: Verbindungselement

## Patentansprüche

1. Gargerätevorrichtung, insbesondere Kochfeldvorrichtung, mit zumindest einer Abschirmeinheit (12a-b), die dazu vorgesehen ist, zumindest einen Ort gegen ein von einer Spule (14a-b) erzeugtes Magnetfeld zumindest teilweise abzuschirmen, und mit zumindest einem Behälter (16a-b), der in einer Einbaulage zu einer Lagerung der zumindest einen Abschirmeinheit (12a-b) vorgesehen ist, wobei die zumindest eine Abschirmeinheit (12a-b) zumindest größtenteils zumindest granulat-förmig ausgebildet ist, **gekennzeichnet durch** zumindest einen Spulenträger (18a-b), der mit dem zumindest einen Behälter (16a-b) verbunden ist.

2. Gargerätevorrichtung nach Anspruch 1, **dadurch gekennzeichnet, dass** die zumindest eine Abschirmeinheit (12a-b) dazu vorgesehen ist, das von der Spule (14a-b) erzeugte Magnetfeld an zumindest einem weiteren Ort zu bündeln.

3. Gargerätevorrichtung nach einem der vorhergehenden Ansprüche, **dadurch gekennzeichnet, dass** die zumindest eine Abschirmeinheit (12a-b) wenigstens ein Pulver aufweist.

4. Gargerätevorrichtung nach einem der vorhergehenden Ansprüche, **dadurch gekennzeichnet, dass** die zumindest eine Abschirmeinheit (12a-b) wenigstens ein Granulat aufweist.

5. Gargerätevorrichtung nach einem der vorhergehenden Ansprüche, **dadurch gekennzeichnet, dass** die zumindest eine Abschirmeinheit (12a-b) wenigstens teilweise aus Ferriten ausgebildet ist.

6. Gargerätevorrichtung nach einem der vorhergehenden Ansprüche, **dadurch gekennzeichnet, dass** die zumindest eine Abschirmeinheit (12a-b) eine relative magnetische Permeabilität von maximal 9000 aufweist.

7. Gargerätevorrichtung nach Anspruch 6, **dadurch gekennzeichnet, dass** die zumindest eine Abschirmeinheit (12a-b) eine relative magnetische Permeabilität von maximal 1500 aufweist.

8. Gargerät, insbesondere Kochfeld, mit zumindest einer Gargerätevorrichtung (10a-b) nach einem der vorhergehenden Ansprüche.

## Claims

1. Cooking appliance device, in particular hob device, with at least one shielding unit (12a-b) which is provided to at least partially shield a location from a magnetic field generated by a coil (14a-b), and with at least one container (16a-b), which is provided in an installation position for mounting the at least one shielding unit (12a-b), wherein the at least one shielding unit (12a-b) is embodied at least for the most part in the form of a granulate, **characterised by** at least one coil carrier (18a-b), which is connected to the at least one container (16a-b).

2. Cooking appliance device according to claim 1, **characterised in that** the at least one shielding unit (12a-b) is provided to bundle the magnetic field generated by the coil (14a-b) at at least one location.

3. Cooking appliance device according to one of the preceding claims, **characterised in that** the at least one shielding unit (12a-b) has at least one powder.

4. Cooking appliance device according to one of the preceding claims, **characterised in that** the at least one shielding unit (12a-b) has at least one granulate.

5. Cooking appliance device according to one of the preceding claims, **characterised in that** the at least one shielding unit (12a-b) is at least partially embodied from ferrites.

6. Cooking appliance device according to one of the preceding claims, **characterised in that** the at least one shielding unit (12a-b) has a maximum relative magnetic permeability of 9000.

7. Cooking appliance device according to claim 6, **characterised in that** the at least one shielding unit (12a-b) has a maximum relative magnetic permeability of 1500.

8. Cooking appliance, in particular hob, with at least one cooking appliance device (10a-b) according to one of the preceding claims.

## Revendications

1. Dispositif d'appareil de cuisson, en particulier dispositif de champ de cuisson, avec au moins une unité de blindage (12a-b) prévue afin de blinder au moins partiellement au moins un endroit contre un champ magnétique généré par une bobine (14a-b), et avec au moins un contenant (16a-b) qui, dans un état monté, est prévu pour un stockage de l'au moins une unité de blindage (12a-b), dans lequel l'au moins une unité de blindage (12a-b) est au moins constituée en majeure partie sous forme granulaire, **caractérisé par** au moins un porte-bobine (18a-b) relié à l'au moins un contenant (16a-b).

2. Dispositif d'appareil de cuisson selon la revendication 1, **caractérisé en ce que** l'au moins une unité de blindage (12a-b) est prévue afin de concentrer le champ magnétique généré par la bobine (14a-b) en au moins un endroit supplémentaire.

3. Dispositif d'appareil de cuisson selon l'une des revendications précédentes, **caractérisé en ce que** l'au moins une unité de blindage (12a-b) présente au moins une poudre.

4. Dispositif d'appareil de cuisson selon l'une des revendications précédentes, **caractérisé en ce que** l'au moins une unité de blindage (12a-b) présente au moins un granulat.

5. Dispositif d'appareil de cuisson selon l'une des revendications précédentes, **caractérisé en ce que** l'au moins une unité de blindage (12a-b) est au moins en partie constituée de ferrites.

6. Dispositif d'appareil de cuisson selon l'une des revendications précédentes, **caractérisé en ce que** l'au moins une unité de blindage (12a-b) présente une perméabilité magnétique relative maximale de 9000.

7. Dispositif d'appareil de cuisson selon la revendication 6, **caractérisé en ce que** l'au moins une unité de blindage (12a-b) présente une perméabilité magnétique relative maximale de 1500.

8. Appareil de cuisson, en particulier champ de cuisson, avec au moins un dispositif d'appareil de cuisson (10a-b) selon l'une des revendications précédentes.
